# EUROPEAN PATENT SPECIFICATION

(11) **EP 4 401 059 B1**
(45) Date of publication and mention of the grant of the patent: **09.12.2026**
(21) Application number: 21956713.8
(22) Date of filing: 07.09.2021
(51) Int. Cl.: G08B 21/02, G08B 25/00, G08B 25/04

(54) **BEHAVIOR MONITORING SYSTEM AND POWER SAVING METHOD THEREOF**
VERHALTENSÜBERWACHUNGSSYSTEM UND ENERGIESPARVERFAHREN DAFÜR
SYSTÈME DE SURVEILLANCE DE COMPORTEMENT ET SON PROCÉDÉ D'ÉCONOMIE D'ÉNERGIE

(43) Date of publication of application: 17.07.2024
(73) Proprietor: Fuji Corporation, Chiryu-shi, Aichi 472-8686 (JP)
(72) Inventor: KAWAGUCHI, Koji, Chiryu-shi, Aichi 472-8686 (JP)
(74) Representative: Grünecker Patent- und Rechtsanwälte PartG mbB
(86) International application number: PCT/JP2021/032878
(87) International publication number: WO 2023/037415

(56) References cited:
- JP-A- 2005 309 965
- JP-A- 2007 189 794
- JP-A- 2007 189 794
- JP-A- 2016 173 642
- JP-A- 2016 173 642
- JP-A- 2019 074 471
- JP-A- 2021 072 051
- JP-A- 2021 103 850
- US-A1- 2016 018 560

## Description

### Technical Field

The present description discloses a behavior monitoring system and a power saving method thereof.

### Background Art

Conventionally, as this type of behavior monitoring system, there has been proposed a system in which a monitored subject monitoring apparatus is provided in each of multiple rooms allocated as a living space of a monitored subject (for example, refer to Patent Literature 1). All the monitored subject monitoring apparatuses are communicably connected to each other via a network, and each monitored subject monitoring apparatus includes a communication IF section, an imaging section (camera), a presence determination section configured to determine presence/absence of a monitored subject in an imaging target based on an image in the imaging target generated by the imaging section, and an operation mode control section (control processing section) configured to control an operation mode. When it is determined that the monitored subject is present in the imaging target in the monitored subject monitoring apparatus, the operation mode control section of each monitored subject monitoring apparatus controls the communication IF section, the imaging section, and the like in a normal operation mode in which the communication IF section, the imaging section, and the like is in an active state, and performs, with the communication IF section, broadcast communication of a command for other monitored subject monitoring apparatuses to shift to a power saving operation mode in which the communication IF section is in an active state while each of the imaging section and the presence determination section is caused to sleep.

### Patent Literature

Patent Literature 1: JP-A-2016-173642
JP 2007 189794 A relates to an in-building control system that can automatically control various electric devices in a building such as a house. There are installed in a room of a dwelling house a lighting fixture, an air conditioner and the like that are operated by power fed through a power cable. Particularly in this case, a human sensor (receptacle-integrated human sensor), the lighting fixture, an air conditioner and the like are connected to the power cable via a PLC modem. The detection information of the human sensor is received by the lighting fixture, the air conditioner and the like with the power cable as a transmission medium, and the automatic control is performed on the basis of the detection information.
US 2016/018560 A1 relates to a person detector that detects a person in an area facing one door surface. An open/close detector detects whether the door is in an open or closed state. When a detected state of the door switches from a closed state to an open state, an open-state person detection information recorder records whether the person detector is detecting a person or not. When the state of the door detected by the open and close detection sensor switches from the open state to the closed state, a closed-state person detection information recorder records whether the person detector is detecting a person or not. A room entry and exit detector detects that there occurs an entry into the room and there occurs an exit out of the room on the basis of a content recorded by the open-state person detection information recorder and the closed-state person detection information recorder.

### Summary of the Invention

### Technical Problem

In the above-described behavior monitoring system, since it is determined whether a monitored subject is present in an imaging target by imaging an inside of the imaging target with a camera, a camera is required in each room, which causes an increase in cost. Furthermore, the monitored subject may feel uncomfortable for being monitored by the camera at all times.

A main object of the present disclosure is to enable power saving at low cost in a behavior monitoring system configured to monitor a behavior of a monitoring target person who lives in a residence.

### Solution to Problem

The object is solved by the subject matter of the independent claims. Preferred embodiments are defined by the dependent claims.

The present disclosure employs the following means in order to achieve the main object described above.

The gist of a behavior monitoring system according to the present disclosure is to be
a behavior monitoring system for monitoring a behavior of a monitoring target person who lives in a residence, and to include
a detection section including an opening/closing detection sensor provided on a door partitioning each room of the residence and configured to detect opening and closing of a corresponding door, and a human detection sensor provided in each room and configured to detect presence/absence of a human,
a determination section configured to determine, based on detection of opening and closing of a door of any room of the residence by the corresponding opening/closing sensor and detection of a human by the human detection sensor provided in the room, that the monitoring target person is present in the room, and
a power control section configured to switch, in a case where the determination section determines a room in which the monitoring target person is present, a mode of the detection section provided in a room other than the room in which the monitoring target person is present from a normal mode to a power saving mode.

In the behavior monitoring system of the present disclosure, it is determined, based on the detection of the opening and closing of the door of any room of the residence by the corresponding opening/closing detection sensor and detection of the human by the human detection sensor provided in the room, that the monitoring target person is present in the room. Accordingly, it is possible to more reliably specify the room in which the monitoring target person is present without using an expensive sensor as the human detection sensor. Furthermore, when the room in which the monitoring target person is present is determined, a mode of a detection section (the opening/closing detection sensor and the human detection sensor) provided in a room other than the room in which the monitoring target person is present is switched from a normal mode to a power saving mode. Accordingly, it is possible to suppress power consumption to an unnecessary sensor or the like. As a result, it is possible to provide a behavior monitoring system capable of saving power at low cost.

### Brief Description of Drawings

Fig. 1 is a schematic configuration diagram of a behavior monitoring system according to the present embodiment.
Fig. 2 is a diagram illustrating an example of a sensor installed in each room of a residence.
Fig. 3 is a flowchart illustrating an example of data measurement processing.

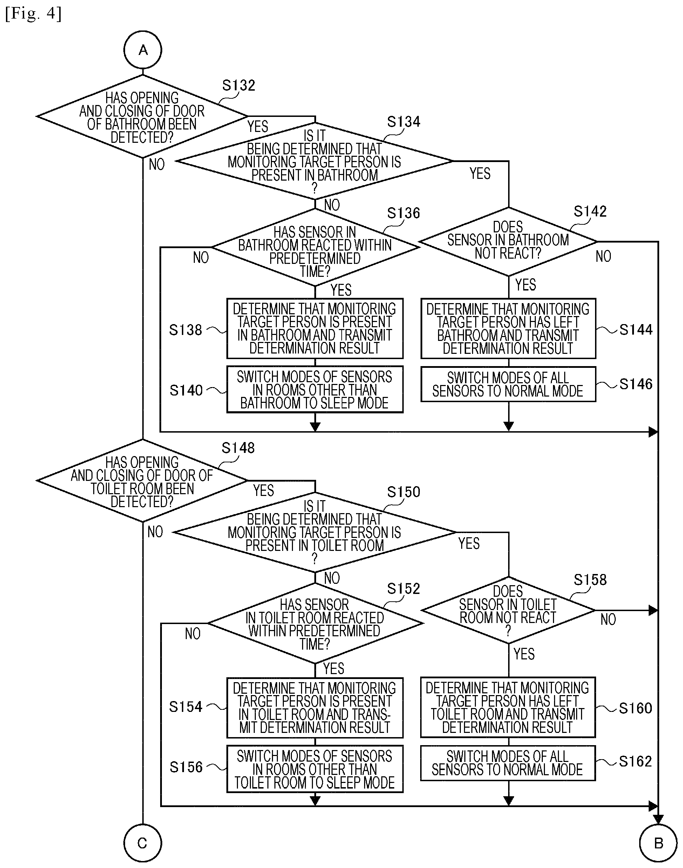

Fig. 4 is a flowchart illustrating an example of the data measurement processing.

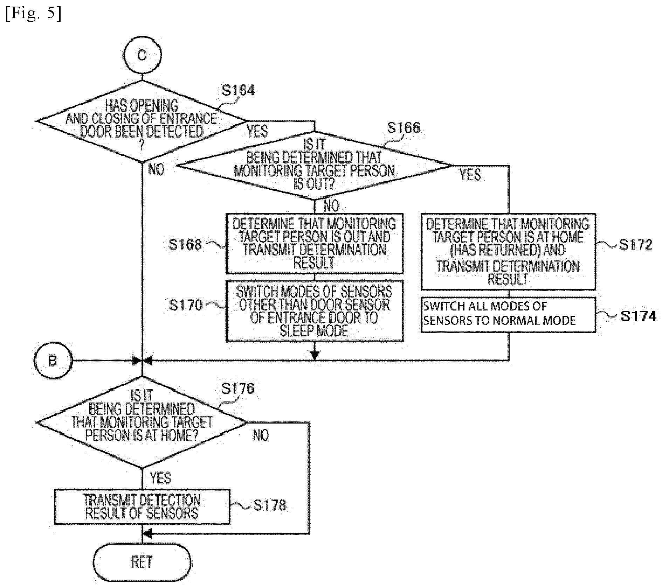

Fig. 5 is a flowchart illustrating an example of the data measurement processing.
Fig. 6 is a flowchart illustrating an example of behavior pattern determination processing.
Fig. 7 is a diagram illustrating an example of an installation position of a camera.
Fig. 8 is a diagram illustrating an example of an imaging result of the camera.

### Description of Embodiments

Next, an embodiment of the present disclosure will be described with reference to the drawings.

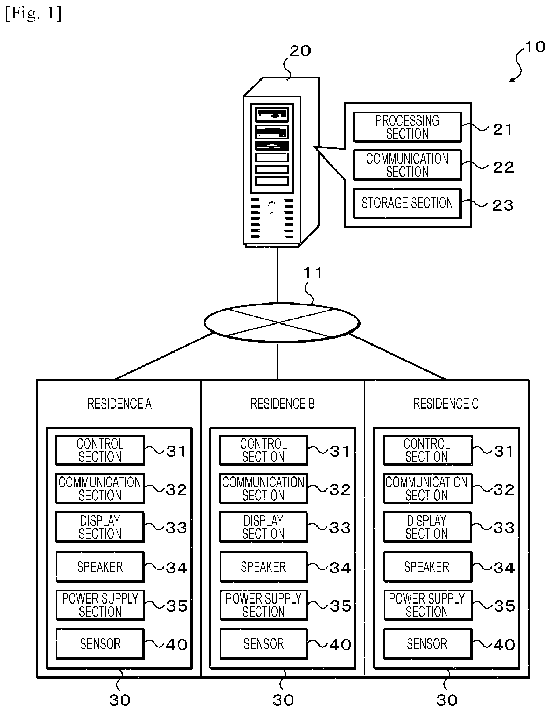

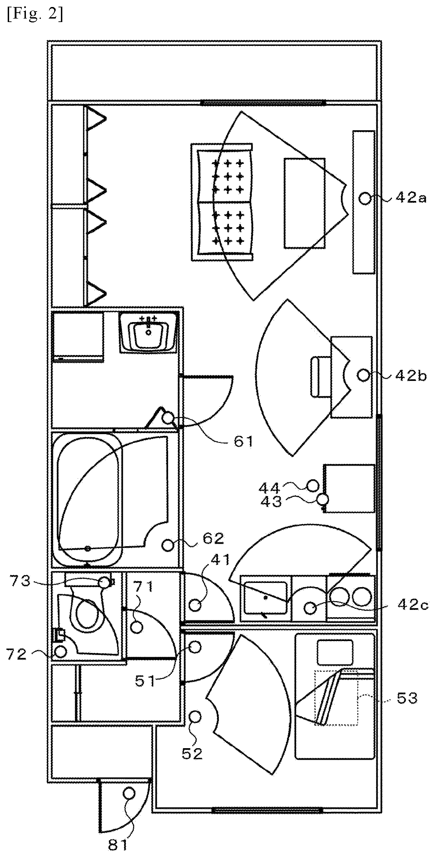

Fig. 1 is a schematic configuration diagram of behavior monitoring system 10 of the present embodiment. As illustrated in Fig. 1, behavior monitoring system 10 of the present embodiment includes management server 20 that manages the entire system, and monitoring apparatuses 30 respectively installed in residences A to C in which a monitoring target person lives. Residences A to C are residences in which, for example, an elderly person or a person requiring care lives alone, and include, for example, an L (living) D (dining) K (kitchen) room, a bedroom, a washroom, a bathroom, a toilet room, and an entrance as illustrated in Fig. 2. Behavior monitoring system 10 can be used, for example, to monitor a behavior of an elderly person or a person requiring care as the monitoring target person in place of a caregiver and to find out an abnormality in the behavior at an early stage.

Monitoring apparatus 30 includes control section 31, communication section 32, display section 33, speaker 34, power supply section 35 (power supply circuit), and sensors 40. Control section 31 is configured as a microprocessor including CPU as a main component, and includes ROM, RAM, and the like in addition to the CPU. Display section 33 and speaker 34 output various information from management server 20 through display or audio.

Sensors 40 are sensors for detecting where the monitoring target person who lives in the residence is and what the monitoring target person who lives in the residence does, and include, as illustrated in Fig. 2, door sensors 41, 43, 51, 61, 71, and 81, human sensors 42a, 42b, 42c, 52, 62, and 72, sleep sensor 53, toilet faucet sensor 73, and temperature sensor 44.

Door sensors 41, 43, 51, 61, 71, and 81 are, for example, magnet-type opening/closing sensors including permanent magnets fixed to door sides and magnetic sensors fixed to frame sides. Door sensor 41 is provided on a door of the LDK room, door sensor 43 is provided on a door of a refrigerator installed in the kitchen, and door sensor 51 is provided on a door of the bedroom. Door sensor 61 is provided on a door of the bathroom, door sensor 71 is provided on a door of the toilet room, and door sensor 81 is provided on an entrance door.

Human sensors 42a, 42b, 42c, 52, 62, and 72 are sensors that detect a person in a detection area in a non-contact manner, and are configured as, for example, infrared sensors that sense an infrared ray and convert the infrared ray into an electric signal. Human sensors 42a, 42b, and 42c are provided in the living section, dining section, and kitchen of the LDK room, respectively. Human sensor 52 is provided in the bedroom, human sensor 62 is provided in the bathroom, and human sensor 72 is provided in the toilet room.

Sleep sensor 53 is, for example, a sheet-type biometric sensor provided under a bed mattress in the bedroom, and acquires biometric information such as a pulse and respiration of a person lying on the bed. Temperature sensor 44 is provided on a front side of the refrigerator, and detects a change in an ambient temperature when the door of the refrigerator is opened. Toilet faucet sensor 73 detects an operation of a flush lever or a flush switch of a toilet bowl, and in the present embodiment, the sensor detects a large-flush operation and a small-flush operation in an identifiable manner.

Power supply section 35 is a power supply circuit that is connected to a commercial power system, converts alternating current power from the commercial power system into direct current power of a predetermined voltage, and supplies the direct current power to control section 31, communication section 32, display section 33, speaker 34, and sensors 40. Power supply section 35 is capable of individually controlling power supply for each sensor of sensors 40, and has, as power supply modes, a normal mode in which power is supplied to a sensor and the sensor is in an operable state, and a sleep mode (power saving mode) in which power supply to the sensor is stopped and the sensor is in an inoperable sleep state. Each sensor of sensors 40 is switched between the normal mode and the sleep mode with power supply section 35 controlled by control section 31.

Management server 20 includes processing section 21, communication section 22, and storage section 23. Processing section 21 is configured as a microprocessor including CPU as a main component, and includes ROM, RAM, and the like in addition to the CPU. Communication section 22 of management server 20 is connected to communication section 32 of each monitoring apparatus 30 via network 11 such as the Internet, and management server 20 and each monitoring apparatus 30 exchange data and a signal with each other via communication sections 22 and 32. Storage section 23 is configured with an HDD, an SSD, or the like, receives data measured by each monitoring apparatus 30, and stores the data for a certain period of time.

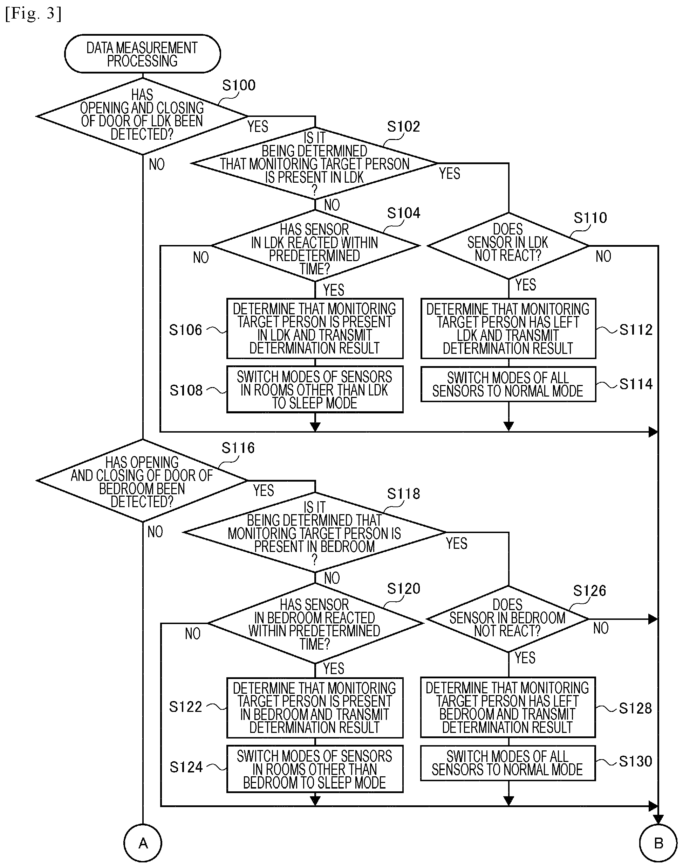

Next, an operation of a behavior monitoring system configured as described above will be described. First, an operation of monitoring apparatus 30 will be described, and then an operation of management server 20 will be described. Fig. 3 is a flowchart illustrating an example of a data measurement processing executed by control section 31 of monitoring apparatus 30 installed in each of residences A to C. This processing is repeatedly executed at a predetermined time interval.

In the data measurement processing, control section 31 determines whether door sensor 41 has detected opening and closing of the door of the LDK room (step S100), whether door sensor 51 has detected opening and closing of the door of the bedroom (step S116), whether door sensor 61 has detected opening and closing of the door of the bathroom (step S132), whether door sensor 71 has detected opening and closing of the door of the toilet room (step S148), and whether door sensor 81 has detected opening and closing of the entrance door (step S164). When it is determined that none of the opening and closing is detected, control section 31 determines whether it has been determined in step S172 described later that the monitoring target person has been at home (step S176). When it is determined that it has been determined that the monitoring target person has been at home, in a case where any of sensors 40 has reacted, control section 31 transmits detection data thereof to management server 20 (step S178), and ends the data measurement processing. On the other hand, when it is determined that it has not been determined that the monitoring target person has been at home, control section 31 ends the data measurement processing.

When it is determined in step S100 that the opening and closing of the door of the LDK room has been detected, control section 31 determines whether it has been determined in step S106 described later that the monitoring target person has been present in the LDK room (step S102). When it is determined that it has not been determined that the monitoring target person has been present in the LDK room, control section 31 determines whether any sensor (human sensors 42a, 42b, and 42c, door sensor 43, or temperature sensor 44) in the LDK room has reacted within a predetermined time after the opening and closing of the door of the LDK room has been detected (step S104). When it is determined that any sensor in the LDK room has not reacted within the predetermined time, control section 31 proceeds to step S176. On the other hand, when it is determined that any sensor in the LDK room has reacted within the predetermined time, control section 31 determines that the monitoring target person has entered the LDK room and is present in the LDK room, and transmits the determination result and detection data of each sensor (human sensors 42a, 42b, or 42c, door sensor 43, or temperature sensor 44) in the LDK room to management server 20 (step S106), and control section 31 controls power supply section 35 such that modes of the sensors in the rooms other than the LDK room (the sensors other than door sensors 41 and 43, human sensors 42a to 42c, and temperature sensor 44 in the LDK room) are switched to the sleep mode (step S108), and proceeds to step S176. In the present embodiment, human sensors 42a, 42b, and 42c are installed in the living section, the dining section, and the kitchen, respectively, and control section 31 determines that the monitoring target person is in the living section when human sensor 42a reacts, determines that the monitoring target person is in the dining section when human sensor 42b reacts, and determines that the monitoring target person is in the kitchen when human sensor 42c reacts. Further, in the present embodiment, door sensor 43 is provided on the door of the refrigerator, and temperature sensor 44 is provided on the front side of the refrigerator, and control section 31 determines that the monitoring target person has opened the door of the refrigerator when door sensor 43 reacts or a temperature detected by temperature sensor 44 decreases within a predetermined time by a predetermined temperature or more. One of door sensor 43 and temperature sensor 44 may be omitted.

When it is determined in step S102 that it has been determined that the monitoring target person has been present in the LDK room, control section 31 determines whether any sensor in the LDK room reacts (step S110). When it is determined that any sensor in the LDK room reacts, control section 31 determines that the monitoring target person is continuously present in the LDK room, and proceeds to step S176. On the other hand, when it is determined that any sensor in the LDK room does not react, control section 31 determines that the monitoring target person is not present in the LDK room and has left the LDK room, and transmits the determination result to management server 20 (step S112). Then, control section 31 controls power supply section 35 such that modes of all the sensors are switched to the normal mode (step S114), and proceeds to step S176.

When it is determined that the opening and closing of the door of the bedroom has been detected in step S116, control section 31 determines whether it has been determined in step S122 described later that the monitoring target person has been present in the bedroom (step S118). When control section 31 determines that it has not been determined that the monitoring target person has been present in the bedroom, control section 31 determines whether any sensor (human sensor 52 or sleep sensor 53) in the bedroom has reacted within a predetermined time after the opening and closing of the door of the bedroom has been detected (step S120). When it is determined that any sensor in the bedroom has not reacted within the predetermined time, control section 31 proceeds to step S176. On the other hand, when it is determined that any sensor in the bedroom has reacted within the predetermined time, control section 31 determines that the monitoring target person has entered the bedroom and is present in the bedroom, and transmits the determination result and detection data of each sensor (human sensor 52 or sleep sensor 53) in the bedroom to management server 20 (step S122), and control section 31 controls power supply section 35 such that modes of the sensors in the rooms other than the bedroom (the sensors other than door sensor 51, human sensor 52, and sleep sensor 53 in the bedroom) are switched to the sleep mode (step S124), and proceeds to step S176.

When it is determined in step S118 that it has been determined that the monitoring target person has been present in the bedroom, control section 31 determines whether any sensor in the bedroom reacts (step S126). When it is determined that any sensor in the bedroom reacts, control section 31 determines that the monitoring target person is continuously present in the bedroom, and proceeds to step S176. On the other hand, when it is determined that any sensor in the bedroom does not react, control section 31 determines that the monitoring target person is not present in the bedroom and has left the bedroom, and transmits the determination result to management server 20 (step S128). Then, control section 31 controls power supply section 35 such that the modes of all the sensors are switched to the normal mode (step S130), and proceeds to step S176.

When it is determined in step S132 that the opening and closing of the door of the bathroom has been detected, control section 31 determines whether it has been determined in step S138 described later that the monitoring target person has been present in the bathroom (step S134). When it is determined that it has not been determined that the monitoring target person has been present in the bathroom, control section 31 determines whether human sensor 62 in the bathroom has reacted within a predetermined time after the opening and closing of the door of the bathroom has been detected (step S136). When it is determined that human sensor 62 in the bathroom does not react within a predetermined time, control section 31 proceeds to step S176. On the other hand, when it is determined that human sensor 62 in the bathroom has reacted within the predetermined time, control section 31 determines that the monitoring target person has entered the bathroom and is present in the bathroom (taking a bath), and transmits the determination result and detection data of human sensor 62 to management server 20 (step S138), and control section 31 controls power supply section 35 such that modes of the sensors in the rooms other than the bathroom (the sensors other than door sensor 61 and human sensor 62 in the bathroom) are switched to the sleep mode (step S140), and proceeds to step S176.

When it is determined in step S134 that it has been determined that the monitoring target person has been present in the bathroom, control section 31 determines whether human sensor 62 in the bathroom reacts (step S142). When it is determined that human sensor 62 in the bathroom reacts, control section 31 determines that the monitoring target person is continuously present in the bathroom, and proceeds to step S176. On the other hand, when it is determined that human sensor 62 in the bathroom does not react, control section 31 determines that the monitoring target person is not present in the bathroom and has left the bathroom, and transmits the determination result to management server 20 (step S144). Then, control section 31 controls power supply section 35 such that the modes of all the sensors are switched to the normal mode (step S146), and proceeds to step S176.

When it is determined in step S148 that the opening and closing of the door of the toilet room has been detected, control section 31 determines whether it has been determined in step S154 described later that the monitoring target person has been present in the toilet room (step S150). When it is determined that the monitoring target person is not present in the toilet room, control section 31 determines whether any sensor (human sensor 72 or toilet faucet sensor 73) in the toilet room has reacted within a predetermined time after the opening and closing of the door of the toilet room has been detected (step S152). When it is determined that any sensor in the toilet room has not reacted within the predetermined time, control section 31 proceeds to step S176. On the other hand, when it is determined that any sensor in the toilet room has reacted within the predetermined time, control section 31 determines that the monitoring target person has entered the toilet room and is present in the toilet room, and transmits the determination result and detection data of each sensor (human sensor 72 or toilet faucet sensor 73) in the toilet room to management server 20 (step S154), and control section 31 controls power supply section 35 such that modes of the sensors in the rooms other than the toilet room (the sensors other than door sensor 71, human sensor 72, and toilet faucet sensor 73 in the toilet room) are switched to the sleep mode (step S156), and proceeds to step S176.

When it is determined in step S150 that it has been determined that the monitoring target person has been present in the toilet room, control section 31 determines whether any sensor in the toilet room reacts (step S158). When it is determined that any sensor in the toilet room has reacted, control section 31 determines that the monitoring target person is continuously present in the toilet room, and proceeds to step S176. On the other hand, when it is determined that any sensor in the toilet room has not reacted, control section 31 determines that the monitoring target person is not present in the toilet room and has left the toilet room, and transmits the determination result to management server 20 (step S160). Then, control section 31 controls power supply section 35 such that the modes of all the sensors are switched to the normal mode (step S162), and proceeds to step S176.

When it is determined in step S164 that the opening and closing of the entrance door has been detected, control section 31 determines whether it has been determined in step S168 described later that the monitoring target person has been out (step S166). When control section 31 determines that it has not been determined that the monitoring target person has been out, control section 31 determines that the monitoring target person is out (step S168). Then, control section 31 controls power supply section 35 such that the modes of all the sensors other than door sensor 81 of the entrance door are switched to the sleep mode (step S170), and proceeds to step S176.

When it is determined in step S166 that it has been determined that the monitoring target person has been out, control section 31 determines that the monitoring target person is at home because the monitoring target person has returned home from being out, and transmits the determination result to management server 20 (step S172). Then, control section 31 controls power supply section 35 such that the modes of all the sensors are switched to the normal mode (step S174), and proceeds to step S176.

In this manner, control section 31 determines in which room the monitoring target person is present, based on a combination of a door sensor that detects opening and closing of a door partitioning each room, a human sensor that detects whether a person (monitoring target person) is present in the corresponding room, and the like, and thus it is possible to more reliably specify a place where the monitoring target person is present. In addition, when it is determined that the monitoring target person is present in a certain room, control section 31 switches modes of sensors installed in the other rooms to the sleep mode, and thus it is possible to suppress unnecessary power consumption and aim energy saving as the entire system. Further, when it is determined that a door of a room in which the monitoring target person is present is opened and closed and the monitoring target person exits, control section 31 causes the modes of all the sensors to return to the normal mode, and thus it is possible to appropriately detect a destination of the monitoring target person.

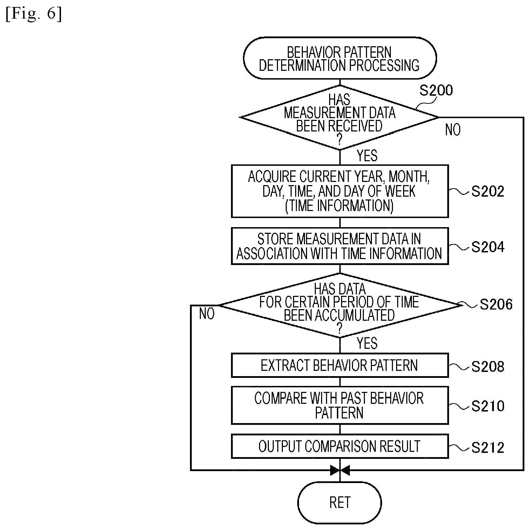

Hereinafter, an operation of management server 20 will be described. Fig. 6 is a flowchart illustrating an example of behavior pattern determination processing executed by processing section 21 of management server 20. This processing is repeatedly executed at a predetermined time interval.

In the behavior pattern determination processing, processing section 21 first determines whether measurement data (a determination result of entry and exit of the monitoring target person, the detection data from sensors 40, or the like) has been received from each monitoring apparatus 30 (step S200). When it is determined that the measurement data has not been received, processing section 21 ends the behavior pattern determination processing. On the other hand, when it is determined that the measurement data has been received, processing section 21 accesses a time server via the Internet to acquire the current year, month, day, time (hour/minute/second), and day of the week as time information (step S202), and stores the acquired time information in storage section 23 in association with the measurement data (step S204).

Next, processing section 21 determines whether data for a certain period of time (for example, for one day or for one week) has been accumulated in storage section 23 (step S206). When it is determined that the data for the certain period of time has not been accumulated yet, processing section 21 ends the behavior pattern determination processing. On the other hand, when it is determined that data for the certain period of time has been accumulated in storage section 23, processing section 21 extracts a behavior pattern from the accumulated data (step S208). The extraction of the behavior pattern is performed by determining wake-up time, meal time, the number of times visiting the toilet, bathing time, sleeping time, and the like based on the time information associated with the measurement data. The wake-up time can be determined by acquiring detection time when a change from a sleeping state to a woken state is detected by sleep sensor 53. The meal time can be determined by acquiring the occurrence time when movement from the kitchen to the dining section, the opening and closing of the refrigerator, stay in the dining section for a predetermined time or more, or the like occurs. The number of times visiting the toilet can be determined by counting the number of times of detection when toilet faucet sensor 63 detects the flush operation. The bathing time can be determined by acquiring time when entry into the bathroom is determined and time when exit from the bathroom is determined, based on a difference therebetween. The sleeping time can be determined by acquiring detection time when a change from the woken state to the sleeping state is detected by sleep sensor 53.

When the behavior pattern is extracted in this manner, processing section 21 compares the extracted behavior pattern with a behavior pattern extracted in the past (step S210). The comparison of the behavior patterns is performed by comparing, for example, each of the wake-up time, the meal time, the number of times visiting the toilet, the bathing time, and the sleeping time. Then, processing section 21 outputs a comparison result to corresponding monitoring apparatus 30 (step S212), and ends the behavior pattern determination processing. Monitoring apparatus 30 outputs the received comparison result to display section 33 and speaker 34. Accordingly, since the caregiver can obtain the behavior of the monitoring target person without being resident, it is possible to find out an abnormality of the monitoring target person at an early stage. Processing section 21 may transmit the comparison result to a portable information terminal such as a smartphone registered in advance in order to notify the monitoring target person or a protector for the monitoring target person of the comparison result.

Here, a correspondence relationship between main elements of the embodiment and main elements of the present disclosure described in Claims will be described. That is, door sensors 41, 51, 61, 71, and 81 of the present embodiment correspond to opening/closing detection sensors of the present disclosure, human sensors 42a, 42b, 42c, 52, 62, and 72, door sensor 43, temperature sensor 44, sleep sensor 53, toilet faucet sensor 73, and the like correspond to human detection sensors, control section 31 that executes the processing of step S100 to S106, step S110 and S112, step S116 to S122, step S126 and S128, step S132 to S138, step S142 and S144, step S148 to S154, step S158 and S160, step S164 to S168, and step S172 of the data measurement processing corresponds to a determination section, and control section 31 that executes the processing of step S108, S114, S124, S130, S140, S146, S156, S170, and S174 of the data measurement processing corresponds to a power control section. Storage section 23 of management server 20 corresponds to a storage section, and processing section 21 that executes the behavior pattern determination processing corresponds to a comparison section.

It is needless to say that the present disclosure is not limited to the embodiments described above, and various forms can be implemented within the technical scope of the present disclosure.

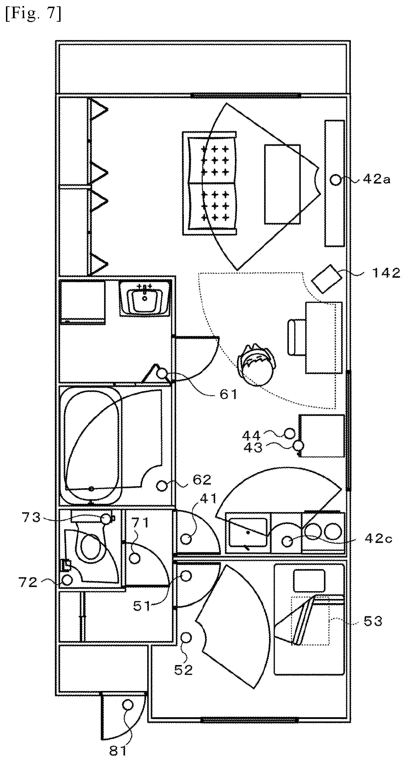

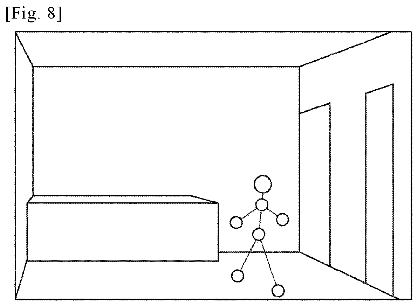

For example, in the above-described embodiment, control section 31 determines in which room the monitoring target person is present based on the combination of door sensors 41, 51, 61, 71, and 81, human sensors 42a, 42b, 42c, 52, 62, and 72, and the like. However, control section 31 may determine where the monitoring target person is and what the monitoring target person does, using a motion capture camera. As illustrated in Fig. 7, motion capture camera 142 may be installed, for example, in place of human sensor 42b in the dining section. As illustrated in Fig. 8, motion capture camera 142 detects only motions of hands and feet, a head, and a torso, and does not acquire information related to privacy such as a face, so that it is possible to suppress the monitoring target person from feeling uncomfortable for being monitored by the camera at all times.

In the behavior monitoring system of the present disclosure described above, based on detection of opening and closing of a door of any room of the residence by a corresponding opening/closing detection sensor and detection of a human by a human detection sensor provided in the room, it is determined that a monitoring target person is present in the room. Accordingly, it is possible to more reliably specify the room in which the monitoring target person is present without using an expensive sensor as the human detection sensor. Furthermore, when the room in which the monitoring target person is present is determined, a mode of a detection section (the opening/closing detection sensor and the human detection sensor) provided in a room other than the room in which the monitoring target person is present is switched from a normal mode to a power saving mode. Accordingly, it is possible to suppress power consumption to an unnecessary sensor or the like. As a result, it is possible to provide a behavior monitoring system capable of saving power at low cost.

In the behavior monitoring system as above according to the present disclosure, the power control section may switch modes of all the detection sections to the normal mode based on detection of the opening and closing of the door of the room in which the monitoring target person is present by the corresponding opening/closing detection sensor, after switching the mode of the detection section provided in the room other than the room in which the monitoring target person is present to the power saving mode. This makes it possible to appropriately detect a next destination after the monitoring target person exits the room in which the monitoring target person is currently present.

In the behavior monitoring system of the present disclosure, the human detection sensor may include a state detection sensor configured to detect a state of an installed object installed in any room of the residence. In this case, a toilet room may be provided as the room of the residence, a toilet bowl may be provided as the installed object in the toilet room, and the state detection sensor configured to detect a state of the toilet bowl may detect an operation of a flush lever or a flush switch of the toilet bowl. A refrigerator may be provided as the installed object in the room, and the state detection sensor configured to detect a state of the refrigerator may detect opening and closing of a door of the refrigerator or a change in a temperature of the refrigerator. This makes it possible to obtain the behavior of the monitoring target person using the state detection sensor.

Furthermore, in the behavior monitoring system of the present disclosure, the opening/closing detection sensor may be also installed on the entrance door of the residence, the determination section may determine that the monitoring target person is out based on detection of opening and closing of the entrance door by the corresponding opening/closing detection sensor in a state where it is determined that the monitoring target person is present in any room of the residence, and may determine that the monitoring target person has returned based on the detection of the opening and closing of the entrance door by the corresponding opening/closing detection sensor in a state where it is determined that the monitoring target person is out, and the control section may switch a mode of the detection section other than the opening/closing detection sensor configured to detect the opening and closing of the entrance door to the power saving mode based on determination that the monitoring target person is out, and may switch modes of all the detection sections to the normal mode based on determination that the monitoring target person has returned. In this way, it is possible to determine being out of monitoring target person, and it is possible to suppress power consumption to an unnecessary sensor or the like while being out.

The behavior monitoring system of the present disclosure may further include a storage section configured to store a detection result of the detection section, and a comparison section configured to extract a behavior pattern of the monitoring target person from the stored detection result and compare a current behavior pattern with a past behavior pattern. In this way, it is possible to obtain the behavior of the monitoring target person and find out the abnormality or the like at an early stage.

In the behavior monitoring system of the present disclosure, the human detection sensor may include a camera installed in any room of the residence, and the camera may be a motion capture camera configured to detect a motion of the monitoring target person. In this way, it is possible to monitor the behavior of the monitoring target person without leaving a video of a face or the like related to privacy.

The present disclosure is not limited to a form of a behavior monitoring system, and may be a form of a power saving method in a behavior monitoring system.

### Industrial Applicability

The present disclosure can be used in a manufacturing industry of a behavior monitoring system.

### Reference Signs List

10 behavior monitoring system, 11 network, 20 management server, 21 processing section, 22 communication section, 23 storage section, 30 monitoring apparatus, 31 control section, 32 communication section, 33 display section, 34 speaker, 35 power supply section, 40 sensor, 41, 43, 51, 61, 71, 81 door sensor, 42a, 42b, 42c, 52, 62, 72 human sensor, 44 temperature sensor, 53 sleep sensor, 73 toilet faucet sensor, 142 motion capture camera

## Claims

1. A behavior monitoring system (10) for monitoring a behavior of a monitoring target person who lives in a residence, the behavior monitoring system comprising:
an opening/closing detection sensor (41, 51, 61, 71, 81) provided on a door partitioning each room of the residence and configured to detect opening and closing of a corresponding door;
a human detection sensor (42a, 42b, 42c, 43, 44, 52, 53, 62, 72, 73) provided in each room and configured to detect presence/absence of a human, wherein the human detection sensors comprise at least one of a door sensor (43) provided on a door of a refrigerator, a temperature sensor (44) provided on a front side of the refrigerator, a sleep sensor (53), and a toilet faucet sensor (73);
a determination section (31) configured to determine, based on detection of opening and closing of a door of any room of the residence by the corresponding opening/closing detection sensor and detection of a human by the human detection sensor provided in the room, that the monitoring target person is present in the room; and
a power control section (31) configured to switch, in a case where the determination section determines a room in which the monitoring target person is present, a mode of sensors provided in rooms other than the room in which the monitoring target person is present from a normal mode to a power saving mode.

2. The behavior monitoring system according to Claim 1,
wherein the power control section switches modes of all sensors to the normal mode when it is determined that the door of the room in which the monitoring target person is present is opened and closed and the monitoring target person exits.

3. The behavior monitoring system according to Claim 1,
wherein the human detection sensors comprise the toilet faucet sensor,
wherein a toilet room is provided as a room of the residence,
wherein a toilet bowl is provided in the toilet room, and
wherein the toilet faucet sensor is configured to detect an operation of a flush lever or a flush switch of the toilet bowl.

4. The behavior monitoring system according to any one of Claims 1 to 3,
wherein the human detection sensors comprise the door sensor provided on the door of the refrigerator, and
wherein the door sensor provided on the door of the refrigerator is configured to detect opening and closing of the door of the refrigerator.

5. The behavior monitoring system according to any one of Claims 1 to 4,
wherein the human detection sensors comprise the temperature sensor, and
wherein the temperature sensor is configured to detect a change of an ambient temperature when the door of the refrigerator is opened.

6. The behavior monitoring system according to any one of Claims 1 to 5,
wherein an opening/closing detection sensor is also installed on an entrance door of the residence,
the determination section determines that the monitoring target person is out based on detection of opening and closing of the entrance door by the corresponding opening/closing detection sensor in a state where it is determined that the monitoring target person is present in any room of the residence, and determines that the monitoring target person has returned based on the detection of the opening and closing of the entrance door by the corresponding opening/closing detection sensor in a state where it is determined that the monitoring target person is out, and
the control section switches a mode of sensors other than the opening/closing detection sensor configured to detect the opening and closing of the entrance door to the power saving mode based on determination that the monitoring target person is out, and switches modes of all the sensors to the normal mode based on determination that the monitoring target person has returned.

7. The behavior monitoring system according to any one of Claims 1 to 6, further comprising:
a storage section configured to store a detection result of the sensors; and
a comparison section configured to extract a behavior pattern of the monitoring target person from the stored detection result and compare a current behavior pattern with a past behavior pattern.

8. The behavior monitoring system according to any one of Claims 1 to 7,
wherein the human detection sensors include a camera installed in any room of the residence, and
the camera is a motion capture camera configured to detect a motion of the monitoring target person.

9. A power saving method in a behavior monitoring system (10) for monitoring a behavior of a monitoring target person who lives in a residence, the power saving method comprising:
providing an opening/closing detection sensor (41, 51, 61, 71, 81) configured to detect opening and closing of a corresponding door on a door partitioning each room of the residence and providing a human detection sensor (42a, 42b, 42c, 43, 44, 52, 53, 62, 72, 73) configured to detect presence/absence of a human in each room, wherein the human detection sensors comprise at least one of a door sensor (43) provided on a door of a refrigerator, a temperature sensor (44) provided on a front side of the refrigerator, a sleep sensor (53), and a toilet faucet sensor (73); and
determining, based on detection of opening and closing of a door of any room of the residence by the corresponding opening/closing detection sensor and detection of a human by the human detection sensor provided in the room, that the monitoring target person is present in the room and switching modes of the opening/closing detection sensor and human detection sensor which are provided in a room other than the room in which the monitoring target person is present, from a normal mode to a power saving mode.

## Patentansprüche

1. Verhaltensüberwachungssystem (10) zum Überwachen eines Verhaltens einer zu überwachenden Person, die in einer Wohnung lebt, wobei das Verhaltensüberwachungssystem Folgendes umfasst:
einen Öffnungs-/Schließerfassungssensor (41, 51, 61, 71, 81), der an einer einen jeweiligen Raum der Wohnung abgrenzenden Tür vorgesehen und dazu eingerichtet ist, das Öffnen und Schließen einer entsprechenden Tür zu erfassen;
einen Personenerfassungssensor (42a, 42b, 42c, 43, 44, 52, 53, 62, 72, 73), der in jedem Raum vorgesehen und dazu eingerichtet ist, die Anwesenheit/Abwesenheit eines Menschen zu erfassen, wobei die Personenerfassungssensoren wenigstens einen von Folgendem umfassen: einen Türsensor (43), der an einer Tür eines Kühlschranks vorgesehen ist, einen Temperatursensor (44), der an einer Vorderseite des Kühlschranks vorgesehen ist, einen Schlafsensor (53) und einen Toilettenspülsensor (73);
eine Bestimmungseinheit (31), die dazu eingerichtet ist, basierend auf einer Erfassung des Öffnens und Schließens einer Tür eines beliebigen Raums der Wohnung durch den entsprechenden Öffnungs-/Schließerfassungssensor und einer Erfassung eines Menschen durch den in dem Raum vorgesehenen Personenerfassungssensor zu bestimmen, dass sich die zu überwachende Person in dem Raum befindet; und
eine Stromversorgungssteuereinheit (31), die dazu eingerichtet ist, in einem Fall, in dem die Bestimmungseinheit einen Raum bestimmt, in dem sich die zu überwachende Person befindet, einen Modus von Sensoren, die in anderen Räumen als dem Raum vorgesehen sind, in dem sich die zu überwachende Person befindet, von einem Normalmodus in einen Energiesparmodus umzuschalten.

2. Verhaltensüberwachungssystem nach Anspruch 1,
wobei die Stromversorgungssteuereinheit Modi sämtlicher Sensoren in den Normalmodus umschaltet, wenn bestimmt wird, dass die Tür des Raums, in dem sich die zu überwachende Person befindet, geöffnet und geschlossen wird und die zu überwachende Person den Raum verlässt.

3. Verhaltensüberwachungssystem nach Anspruch 1,
wobei die Personenerfassungssensoren den Toilettenspülsensor umfassen,
wobei ein Toilettenraum als ein Raum der Wohnung vorgesehen ist,
wobei eine Toilettenschüssel in dem Toilettenraum vorgesehen ist, und
wobei der Toilettenspülsensor dazu eingerichtet ist, eine Betätigung eines Spülhebels oder eines Spülschalters der Toilettenschüssel zu erfassen.

4. Verhaltensüberwachungssystem nach einem der Ansprüche 1 bis 3,
wobei die Personenerfassungssensoren den an der Tür des Kühlschranks vorgesehenen Türsensor umfassen, und
wobei der an der Tür des Kühlschranks vorgesehene Türsensor dazu eingerichtet ist, das Öffnen und Schließen der Tür des Kühlschranks zu erfassen.

5. Verhaltensüberwachungssystem nach einem der Ansprüche 1 bis 4,
wobei die Personenerfassungssensoren den Temperatursensor umfassen, und
wobei der Temperatursensor dazu eingerichtet ist, eine Änderung einer Umgebungstemperatur zu erfassen, wenn die Tür des Kühlschranks geöffnet wird.

6. Verhaltensüberwachungssystem nach einem der Ansprüche 1 bis 5,
wobei ein Öffnungs-/Schließerfassungssensor auch an einer Eingangstür der Wohnung installiert ist,
die Bestimmungseinheit basierend auf einer Erfassung des Öffnens und Schließens der Eingangstür durch den entsprechenden Öffnungs-/Schließerfassungssensor in einem Zustand, in dem bestimmt wird, dass sich die zu überwachende Person in einem beliebigen Raum der Wohnung befindet, bestimmt, dass die zu überwachende Person außer Haus ist, und basierend auf der Erfassung des Öffnens und Schließens der Eingangstür durch den entsprechenden Öffnungs-/Schließerfassungssensor in einem Zustand, in dem bestimmt wird, dass die zu überwachende Person außer Haus ist, bestimmt, dass die zu überwachende Person zurückgekehrt ist, und
die Steuereinheit einen Modus von anderen Sensoren als dem Öffnungs-/Schließerfassungssensor, der dazu eingerichtet ist, das Öffnen und Schließen der Eingangstür zu erfassen, basierend auf der Bestimmung, dass die zu überwachende Person außer Haus ist, in den Energiesparmodus umschaltet und Modi sämtlicher Sensoren basierend auf der Bestimmung, dass die zu überwachende Person zurückgekehrt ist, in den Normalmodus umschaltet.

7. Verhaltensüberwachungssystem nach einem der Ansprüche 1 bis 6, ferner umfassend:
eine Speichereinheit, die dazu eingerichtet ist, ein Erfassungsergebnis der Sensoren zu speichern; und
eine Vergleichseinheit, die dazu eingerichtet ist, ein Verhaltensmuster der zu überwachenden Person aus dem gespeicherten Erfassungsergebnis zu extrahieren und ein aktuelles Verhaltensmuster mit einem früheren Verhaltensmuster zu vergleichen.

8. Verhaltensüberwachungssystem nach einem der Ansprüche 1 bis 7,
wobei die Personenerfassungssensoren eine Kamera umfassen, die in einem beliebigen Raum der Wohnung installiert ist, und
die Kamera eine Bewegungserfassungskamera ist, die dazu eingerichtet ist, eine Bewegung der zu überwachenden Person zu erfassen.

9. Energiesparverfahren in einem Verhaltensüberwachungssystem (10) zum Überwachen eines Verhaltens einer zu überwachenden Person, die in einer Wohnung lebt, wobei das Energiesparverfahren Folgendes umfasst:
Vorsehen eines Öffnungs-/Schließerfassungssensors (41, 51, 61, 71, 81), der dazu eingerichtet ist, das Öffnen und Schließen einer entsprechenden Tür zu erfassen, an einer einen jeweiligen Raum der Wohnung abgrenzenden Tür und Vorsehen eines Personenerfassungssensors (42a, 42b, 42c, 43, 44, 52, 53, 62, 72, 73), der dazu eingerichtet ist, die Anwesenheit/Abwesenheit eines Menschen zu erfassen, in jedem Raum, wobei die Personenerfassungssensoren wenigstens einen von Folgendem umfassen: einen Türsensor (43), der an einer Tür eines Kühlschranks vorgesehen ist, einen Temperatursensor (44), der an einer Vorderseite des Kühlschranks vorgesehen ist, einen Schlafsensor (53) und einen Toilettenspülsensor (73); und
Bestimmen, basierend auf einer Erfassung des Öffnens und Schließens einer Tür eines beliebigen Raums der Wohnung durch den entsprechenden Öffnungs-/Schließerfassungssensor und einer Erfassung eines Menschen durch den in dem Raum vorgesehenen Personenerfassungssensor, dass sich die zu überwachende Person in dem Raum befindet, und Umschalten von Modi des Öffnungs-/Schließerfassungssensors und des Personenerfassungssensors, die in einem anderen Raum als dem Raum vorgesehen sind, in dem sich die zu überwachende Person befindet, von einem Normalmodus in einen Energiesparmodus.

## Revendications

1. Système de surveillance de comportement (10) destiné à surveiller un comportement d'une personne cible de la surveillance qui vit dans une habitation, le système de surveillance de comportement comprenant :
un capteur de détection d'ouverture/fermeture (41, 51, 61, 71, 81) prévu sur une porte délimitant chaque pièce de l'habitation et configuré pour détecter l'ouverture et la fermeture d'une porte correspondante ;
un capteur de détection de personne (42a, 42b, 42c, 43, 44, 52, 53, 62, 72, 73) prévu dans chaque pièce et configuré pour détecter la présence/absence d'une personne, les capteurs de détection de personne comprenant au moins l'un des éléments suivants : un capteur de porte (43) prévu sur une porte d'un réfrigérateur, un capteur de température (44) prévu sur une face avant du réfrigérateur, un capteur de sommeil (53) et un capteur de chasse d'eau des toilettes (73) ;
une unité de détermination (31) configurée pour déterminer, sur la base d'une détection de l'ouverture et de la fermeture d'une porte d'une pièce quelconque de l'habitation par le capteur de détection d'ouverture/fermeture correspondant et d'une détection d'une personne par le capteur de détection de personne prévu dans la pièce, que la personne cible de la surveillance est présente dans la pièce ; et
une unité de commande de l'alimentation électrique (31) configurée pour commuter, dans un cas où l'unité de détermination détermine une pièce dans laquelle la personne cible de la surveillance est présente, un mode de capteurs prévus dans des pièces autres que la pièce dans laquelle la personne cible de la surveillance est présente, d'un mode normal à un mode d'économie d'énergie.

2. Système de surveillance de comportement selon la revendication 1,
dans lequel l'unité de commande de l'alimentation électrique commute les modes de tous les capteurs vers le mode normal lorsqu'il est déterminé que la porte de la pièce dans laquelle la personne cible de la surveillance est présente est ouverte et fermée et que la personne cible de la surveillance quitte la pièce.

3. Système de surveillance de comportement selon la revendication 1,
dans lequel les capteurs de détection de personne comprennent le capteur de chasse d'eau des toilettes,
dans lequel une pièce de toilettes est prévue en tant que pièce de l'habitation,
dans lequel une cuvette de toilettes est prévue dans la pièce de toilettes, et
dans lequel le capteur de chasse d'eau des toilettes est configuré pour détecter un actionnement d'un levier de chasse d'eau ou d'un interrupteur de chasse d'eau de la cuvette de toilettes.

4. Système de surveillance de comportement selon l'une quelconque des revendications 1 à 3,
dans lequel les capteurs de détection de personne comprennent le capteur de porte prévu sur la porte du réfrigérateur, et
dans lequel le capteur de porte prévu sur la porte du réfrigérateur est configuré pour détecter l'ouverture et la fermeture de la porte du réfrigérateur.

5. Système de surveillance de comportement selon l'une quelconque des revendications 1 à 4,
dans lequel les capteurs de détection de personne comprennent le capteur de température, et
dans lequel le capteur de température est configuré pour détecter une variation d'une température ambiante lorsque la porte du réfrigérateur est ouverte.

6. Système de surveillance de comportement selon l'une quelconque des revendications 1 à 5,
dans lequel un capteur de détection d'ouverture/fermeture est également installé sur une porte d'entrée de l'habitation,
l'unité de détermination détermine que la personne cible de la surveillance est sortie sur la base d'une détection de l'ouverture et de la fermeture de la porte d'entrée par le capteur de détection d'ouverture/fermeture correspondant dans un état dans lequel il est déterminé que la personne cible de la surveillance est présente dans une pièce quelconque de l'habitation, et détermine que la personne cible de la surveillance est revenue sur la base de la détection de l'ouverture et de la fermeture de la porte d'entrée par le capteur de détection d'ouverture/fermeture correspondant dans un état dans lequel il est déterminé que la personne cible de la surveillance est sortie, et
l'unité de commande commute un mode de capteurs autres que le capteur de détection d'ouverture/fermeture configuré pour détecter l'ouverture et la fermeture de la porte d'entrée vers le mode d'économie d'énergie sur la base de la détermination que la personne cible de la surveillance est sortie, et commute les modes de tous les capteurs vers le mode normal sur la base de la détermination que la personne cible de la surveillance est revenue.

7. Système de surveillance de comportement selon l'une quelconque des revendications 1 à 6, comprenant en outre :
une unité de stockage configurée pour stocker un résultat de détection des capteurs ; et
une unité de comparaison configurée pour extraire un schéma comportemental de la personne cible de la surveillance à partir du résultat de détection stocké et comparer un schéma comportemental actuel à un schéma comportemental passé.

8. Système de surveillance de comportement selon l'une quelconque des revendications 1 à 7,
dans lequel les capteurs de détection de personne comprennent une caméra installée dans une pièce quelconque de l'habitation, et
la caméra est une caméra de capture de mouvement configurée pour détecter un mouvement de la personne cible de la surveillance.

9. Procédé d'économie d'énergie dans un système de surveillance de comportement (10) destiné à surveiller un comportement d'une personne cible de la surveillance qui vit dans une habitation, le procédé d'économie d'énergie comprenant :
la mise en place d'un capteur de détection d'ouverture/fermeture (41, 51, 61, 71, 81) configuré pour détecter l'ouverture et la fermeture d'une porte correspondante sur une porte délimitant chaque pièce de l'habitation et la mise en place d'un capteur de détection de personne (42a, 42b, 42c, 43, 44, 52, 53, 62, 72, 73) configuré pour détecter la présence/absence d'une personne dans chaque pièce, les capteurs de détection de personne comprenant au moins l'un des éléments suivants : un capteur de porte (43) prévu sur une porte d'un réfrigérateur, un capteur de température (44) prévu sur une face avant du réfrigérateur, un capteur de sommeil (53) et un capteur de chasse d'eau des toilettes (73) ; et
la détermination, sur la base d'une détection de l'ouverture et de la fermeture d'une porte d'une pièce quelconque de l'habitation par le capteur de détection d'ouverture/fermeture correspondant et d'une détection d'une personne par le capteur de détection de personne prévu dans la pièce, que la personne cible de la surveillance est présente dans la pièce et la commutation des modes du capteur de détection d'ouverture/fermeture et du capteur de détection de personne, qui sont prévus dans une pièce autre que la pièce dans laquelle la personne cible de la surveillance est présente, d'un mode normal à un mode d'économie d'énergie.
